# FASCICULE DE BREVET EUROPEEN

(11) **EP 2 506 546 B1**
(45) Date de publication et mention de la délivrance du brevet: **09.08.2017**
(21) Numéro de dépôt: 12161052.1
(22) Date de dépôt: 23.03.2012
(51) Int. Cl.: H04M 3/533, H04M 1/725

(54) **PROCEDE DE GESTION DE MESSAGES VOCAUX OBTENUS A PARTIR D'UN ENSEMBLE D'AU MOINS DEUX SYSTEMES DIFFERENTS DE MESSAGERIE VOCALE**
VERFAHREN ZUR VERWALTUNG VON VOICE-MAILS, DIE VON EINER EINHEIT BESTEHEND AUS MINDESTENS ZWEI VERSCHIEDENEN VOICE-MAIL-SYSTEMEN ÜBERMITTELT WURDEN
METHOD FOR MANAGING VOICE MESSAGES OBTAINED FROM A SET OF AT LEAST TWO DIFFERENT VOICE MESSAGE SYSTEMS

(30) Priorité: 31.03.2011 FR 1152728
(43) Date de publication de la demande: 03.10.2012
(73) Titulaire: Orange, 75015 Paris (FR)
(72) Inventeur: Molon Noblot, Jérôme, 92240 MALAKOFF (FR); Benoit, Mathieu, 78180 MONTIGNY-LE-BRETONNEUX (FR); Labranche, Miguel, 94380 BONNEUIL SUR MARNE (FR)

(56) Documents cités:
- EP-A2- 1 599 022
- WO-A2-2010/065540
- US-A1- 2010 151 834

## Description

L'invention concerne la gestion de messages vocaux obtenus à partir de différents systèmes de messagerie vocale, sur au moins un réseau de communication.

Avec l'essor des moyens de communication, la plupart des individus utilise couramment plusieurs terminaux de communication vocale. Ainsi, l'utilisateur dispose en général d'un ou plusieurs téléphones mobiles - à usage privé ou à usage professionnel - pouvant se connecter à un réseau de téléphonie mobile ; d'un téléphone fixe résidentiel, accédant typiquement, via une passerelle domestique, à un réseau de communication vocale sur réseau IP *(Internet Protocol) ;* d'un téléphone fixe professionnel, connecté à un réseau d'entreprise et pouvant accéder au réseau téléphonique publique via un autocommutateur téléphonique privé (désigné par *Private Automatic Branch eXchange* en anglais, et abrégé par les sigles PABX ou PBX).

Chacun des services de téléphonie associés aux différents types de réseau précités inclut un système spécifique de messagerie vocale fournissant un ensemble de services à l'utilisateur, parmi lesquels, la dépose de messages vocaux, la consultation de messages déposés, le rappel du correspondant, etc.

Par conséquent, dans ce contexte, un utilisateur désirant prendre connaissance des nouveaux messages vocaux qui ont été stockés par les différents systèmes de messagerie vocale auxquels il a accès, devra consulter, une a une, chacune des messageries vocales correspondante, ce qui multiplie d'autant le nombre d'opérations nécessaires à cette prise de connaissance globale des messages vocaux reçus.

Il existe des solutions pour tenter de faire converger ou unifier l'utilisation de différents types de système de messagerie vocale, par exemple en donnant à l'utilisateur la possibilité de programmer des renvois automatiques entre plusieurs messageries vocales. Cependant, cette solution n'est pas satisfaisante car elle est relativement complexe à utiliser, et de plus, un renvoi d'une messagerie vocale à une autre n'est en général qu'une solution temporaire, par exemple lorsque l'utilisateur, partant en vacances, désire recevoir sur sa messagerie de téléphonie mobile les messages reçus sur la messagerie vocale liée au téléphone fixe de son domicile.

La demande de brevet US 2010/151834 décrit un système de messagerie vocale visuelle VVM configuré pour fournir des données à un dispositif mobile par l'établissement d'une session de communication entre le dispositif mobile et un serveur VVM en réponse à la survenue d'un ou plusieurs évènements relatifs aux messages vocaux.

La demande de brevet EP 1 599 022 décrit un système de notification de messages vocaux pour dispositifs de communication mobile et traite du problème de l'accès par un utilisateur à des messages vocaux en provenance de plusieurs systèmes de messagerie différents.

Le document de brevet WO2007/131060 décrit un système pour gérer des messages vocaux au travers de systèmes de messagerie vocale disparates. Le système décrit comprend un serveur qui agit comme une passerelle interfaçant des systèmes de messagerie vocale et des dispositifs d'utilisateur. En particulier, le serveur accède un système de messagerie vocale d'un utilisateur et récupère un message vocal à partir du système. Le serveur transmet ensuite le message vocal à un autre système de messagerie de l'utilisateur, ou bien à un dispositif de l'utilisateur. Si nécessaire, le message vocal est transcodé dans un format approprié. Ensuite, le serveur met à jour l'état du message transmis dans chaque système de messagerie. Par exemple, les actions exécutées dans un dispositif de l'utilisateur, qui concernent un message transmis, sont contrôlées par le serveur ou bien font l'objet d'un rapport envoyé au serveur par le dispositif. Le serveur peut ensuite mettre à jour l'état du message vocal dans le système de messagerie vocale d'origine.

Bien que le document WO2007/131060 apporte une solution offrant un accès partiellement unifié à divers types de messagerie vocales, cette solution présente notamment l'inconvénient de nécessiter la mise ne oeuvre d'un serveur spécifique dans le réseau - ce qui est relativement complexe et coûteux à mettre en oeuvre -, et de plus, la solution décrite dans ce document ne permet pas à un utilisateur de pouvoir accéder à toutes ses messageries vocales depuis un seul et même terminal.

La présente invention vise à remédier à cette situation. A cet effet, l'invention propose, selon un premier aspect, un procédé de gestion de messages vocaux obtenus à partir d'un ensemble d'au moins deux systèmes différents de messagerie vocale. Selon l'invention, ce procédé est mis en oeuvre par un terminal d'utilisateur pouvant se connecter à un réseau de communication de type *"réseau IP",* et il comporte des opérations de :
- connexion du terminal utilisateur au réseau IP ;
- récupération dans le terminal d'utilisateur des nouveaux messages vocaux reçus par chaque système de messagerie vocale ;
- mise à jour d'une interface homme-machine du terminal d'utilisateur, avec des informations d'identification des nouveaux messages vocaux reçus.

Selon le procédé de gestion de messages vocaux de l'invention, toutes les opérations précitées sont exécutées dans le terminal de l'utilisateur, et non via un élément supplémentaire implanté dans le réseau - réseau mobile ou réseau IP -, tel qu'un serveur spécifique. Par conséquent, l'invention constitue une solution de convergence de messageries vocales, beaucoup plus simple et économique à mettre en oeuvre que celles de l'art antérieur. De plus, la solution de messagerie convergente selon l'invention, offre une simplicité d'usage remarquable pour l'utilisateur du terminal de téléphonie - tel qu'un "téléphone intelligent" *(smartphone* en anglais) -, puisque tous les nouveaux messages des différents systèmes de messagerie vocale sont automatiquement transmis au terminal d'utilisateur, et l'utilisateur est informé de l'arrivée de ces nouveaux messages grâce à la mise à jour automatique de l'interface homme-machine présentée à l'utilisateur, avec les informations d'identification de ces nouveaux messages.

En particulier, l'invention permet à l'utilisateur de récupérer dans un de ses terminaux (par exemple son *smartphone* personnel) les messages en provenance des messageries vocales issues de son environnement professionnel - par exemple, la messagerie vocale liée à son terminal fixe professionnel et celle liée à son terminal mobile professionnel -, et de ce point de vue, l'invention offre une solution avantageuse, simple à utiliser, de convergence de messageries vocales entre la sphère professionnelle et la sphère personnelle de l'utilisateur.

Selon une caractéristique particulière de l'invention, l'opération de récupération des nouveaux messages vocaux inclut une étape de synchronisation de l'état des messages vocaux entre les messages vocaux stockés dans le terminal et ceux stockés par chaque système de messagerie vocale. Dans une mode particulier de réalisation, les messages vocaux peuvent être dans au moins un état parmi l'ensemble d'états suivant : *"lu", "nouveau", "transféré",* "répondu".

Ainsi, en plus du fait qu'une copie des nouveaux messages est transmise automatiquement des différents serveurs de messagerie vocale vers le terminal d'utilisateur dans lequel le procédé de l'invention est mis en oeuvre, l'état des messages reçus précédemment dans le terminal utilisateur est rendu cohérent avec celui de ces mêmes messages stockés dans les serveurs de messagerie d'origine.

Par exemple, si un message vocal reçu dans la messagerie vocale associé au compte de téléphonie résidentiel de l'utilisateur a été pour la première fois lu par l'utilisateur au moyen de son téléphone mobile dans lequel le procédé de l'invention est mis en oeuvre, si l'utilisateur consulte via son téléphone résidentiel la messagerie associée, le message vocal précité ne sera plus identifié dans cette messagerie comme un nouveau message.

Selon une application spécifique de l'invention, l'ensemble de systèmes différents de messagerie vocale inclut au moins deux des systèmes de messagerie vocale suivants :
- un système de messagerie vocale de téléphonie voix sur IP ;
- un système de messagerie vocale de type PBX ;
- un système de messagerie vocale de téléphonie mobile.

Les trois systèmes de messagerie précités sont parmi les plus fréquemment utilisés, par conséquent disposer d'une telle application de convergence de messageries installée dans un des terminaux de communication de l'utilisateur est particulièrement avantageux pour ce dernier, car il dispose ainsi d'un accès unifié à l'ensemble de ses messageries vocales.

Selon un mode de réalisation particulier, le terminal d'utilisateur est un terminal de téléphonie mobile, par exemple un *smartphone,* connecté à un réseau de téléphonie mobile. Dans ce cas, le terminal d'utilisateur est connecté au réseau IP via une passerelle d'accès entre le réseau de téléphonie mobile et le réseau IP.

Selon un autre mode de réalisation, le terminal d'utilisateur est un terminal de téléphonie de type "voix sur IP", par exemple un téléphone fixe résidentiel connecté à une passerelle résidentielle.

Selon d'autres caractéristiques de réalisation de l'invention :
- l'opération de récupération de messages vocaux, pour chaque système de messagerie vocale, inclut une étape préalable d'authentification de l'utilisateur auprès d'un serveur d'authentification associé au système de messagerie vocale considéré.
- L'interface homme-machine du terminal d'utilisateur, est une interface graphique affichée sur un écran équipant le terminal.

Corrélativement, selon un second aspect, l'invention concerne un terminal d'utilisateur apte à se connecter à un réseau de communication de type "réseau IP", adapté pour mettre en oeuvre un procédé de gestion de messages vocaux, tel que succinctement exposé ci-dessus. Selon l'invention, un tel terminal comporte :
- des moyens de connexion à un réseau de type "réseau IP";
- des moyens de récupération de nouveaux messages vocaux reçus par chaque système de messagerie vocale ;
- une interface homme-machine pour fournir des informations d'identification de nouveaux messages reçus, à un utilisateur dudit terminal.

En pratique, les moyens équipant un terminal d'utilisateur tel que défini ci-dessus sont réalisés sous forme logicielle. Par conséquent, la présente invention a également pour objet selon un troisième aspect, une application logicielle destinée à être installée dans un terminal de communication apte à se connecter à un réseau de communication de type "réseau IP" ; cette application logicielle comportant des instructions de programme, dont l'exécution par un processeur équipant le terminal provoque la mise en oeuvre d'un procédé de gestion de messages vocaux, selon l'invention, tel que brièvement exposé plus haut.

Les avantages procurés par l'utilisation d'un tel terminal d'utilisateur ou l'exécution d'une telle application logicielle sont identiques à ceux mentionnés plus haut en relation avec le procédé de gestion de messages vocaux, selon l'invention.

L'invention sera mieux comprise à l'aide de la description détaillée qui va suivre, faite en se référant aux dessins annexés dans lesquels :
- la figure 1 représente une architecture de réseaux de communication bâtie autour d'un réseau IP, dans laquelle on peut mettre en oeuvre la présente invention ;
- la figure 2 est un schéma illustrant les principales opérations mises en oeuvre selon un procédé de gestion de messages vocaux selon l'invention, entre un terminal d'utilisateur et divers serveurs de messagerie vocale, dans un environnement réseau tel que représenté à la figure 1 ; et
- les figures 3a, 3b, 3c représentent une interface graphique utilisateur affichée sur l'écran d'un téléphone mobile, à trois stades différents de fonctionnement de l'application logicielle de gestion des messages vocaux selon l'invention, installée dans le téléphone.

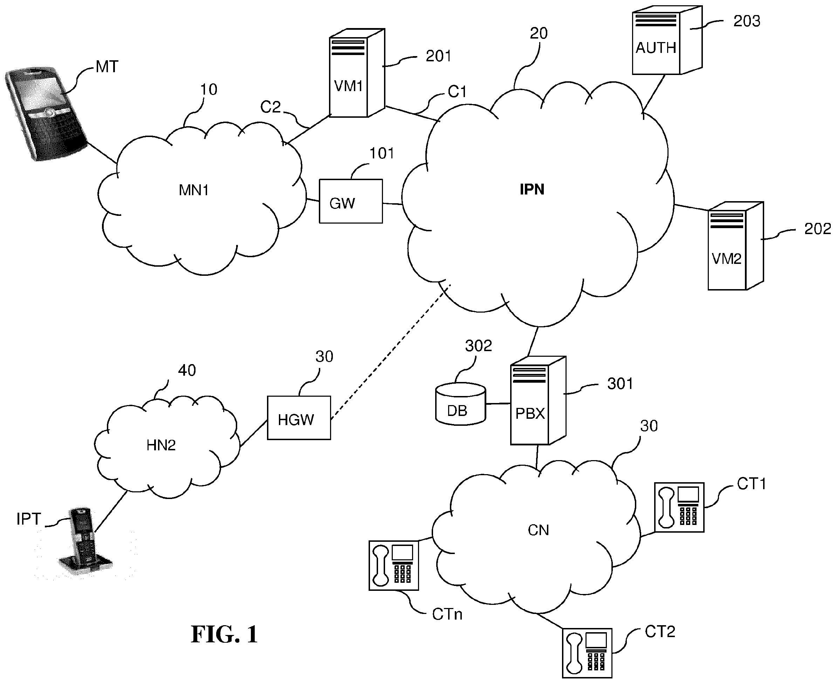

La **figure 1** représente une architecture de réseaux de communication bâtie autour d'un réseau IP, dans laquelle on peut mettre en oeuvre la présente invention.

L'architecture représentée à la figure 1 est bâtie autour d'un réseau de communication IPN (20) basé sur la famille de protocoles IP *(Internet Protocol*), désigné couramment par "réseau IP" *(IP network* en anglais). Il s'agit ici du réseau IP privé d'un opérateur réseau ou de télécommunications, ou d'un fournisseur d'accès à Internet.

L'architecture réseau de la figure 1 comporte aussi un réseau de téléphonie mobile MN1 (10) qui peut être un réseau mobile basé sur l'une des normes de téléphonie mobile suivantes :
- GSM *(Global System for Mobile Communications),*
- GPRS *(General Packet Radio Service),*
- EDGE *(Enhanced Data Rates for GSM Evolution),*
- UMTS *(Universal Mobile Telecommunications System),* ou
- LTE *(Long Term Evolution).*

Le réseau mobile 10 est classiquement relié au réseau IP IPN (20) de l'opérateur de télécommunications, par l'intermédiaire d'une passerelle IP (GW) 101.

Un terminal de téléphonie mobile MT d'un utilisateur est connecté au réseau mobile 10. L'utilisateur du terminal MT, abonné au service de téléphonie mobile délivré par l'opérateur de télécommunications, dispose dans le cadre de ce service, d'une messagerie vocale gérée par un serveur VM1, 201, connecté de manière classique d'une part au réseau IP privé 20 (connexion C1), et d'autre part au réseau mobile MN1, 10 (connexion C2), en général à un équipement MSC *(Mobile Switching Center).*

Par ailleurs, un serveur ou plateforme d'authentification IP (AUTH) 203, relié au réseau IP 20, est chargé de vérifier les droits d'accès de l'utilisateur aux services liés à son compte d'utilisateur de téléphonie mobile, et en particulier de vérifier les droits d'accès de l'utilisateur au service unifié de messagerie vocale, selon l'invention.

De manière similaire, un réseau domestique HN2 (40) est relié au réseau IP privé IPN (20) via une passerelle résidentielle HGW (30), par exemple une Livebox® commercialisée par l'opérateur Orange, qui fournit un service de téléphonie fixe sur IP, désigné par voix sur IP (VoIP - *Voice over IP* en anglais). Un terminal de téléphonie VolP, IPT, de l'utilisateur est connecté au réseau domestique HN2, qui dispose d'un abonnement à un service de téléphonie fixe sur le réseau IP 20 fourni par l'opérateur de télécommunications. Dans le cadre de ce service de téléphonie fixe, un service de messagerie vocale est également fourni à l'utilisateur du téléphone IPT ; cette messagerie vocale est gérée par un second serveur de messagerie VM2, 202, connecté au réseau IP privé 20. Le serveur de messagerie VM2 est par ailleurs associé à un serveur d'authentification chargé de vérifier les droits d'accès de l'utilisateur à sa messagerie vocale de téléphonie fixe. Pour simplifier l'exposé, le serveur d'authentification précité est, dans le mode de réalisation décrit, inclus dans le serveur de messagerie VM2.

Toujours à la figure 1, un réseau de communication d'entreprise CN (30) est relié au réseau IP 20 par l'intermédiaire d'un autocommutateur téléphonique privé (PBX), 301. L'autocommutateur 301 est associé à une base de données DB, 302, dans laquelle sont stockées les messageries électroniques et les messageries vocales, associées aux postes téléphoniques CT1, CT2, ..., CTn des employés de l'entreprise associés à ces postes téléphoniques. L'autocommutateur PBX (301) assure ainsi la gestion des communications entre les différents terminaux CT1-CTn et fournit aux utilisateurs de ces terminaux un ensemble de services parmi lesquels un service de messagerie vocale et un service de messagerie électronique *(email*)*.* L'autocommutateur PBX, 301 inclut également un serveur d'authentification chargé de vérifier les droits d'accès des utilisateurs des terminaux de communication connectés au réseau d'entreprise CN, 30 aux services de messagerie vocales et électroniques gérés par l'autocommutateur 301 - ces terminaux de communication incluant les terminaux de téléphonie CT1-n précités, mais également des terminaux informatiques, de type PC par exemple (non représentés).

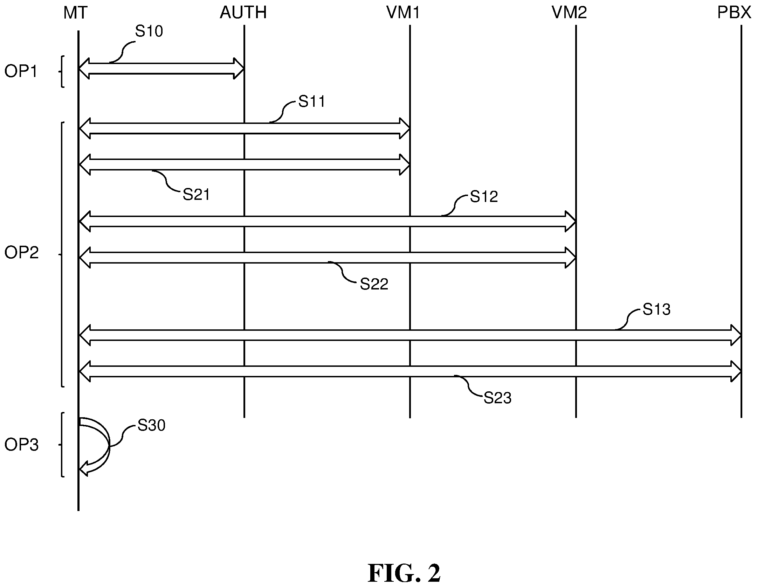

En liaison avec la **figure 2****,** on va à présent décrire plus en détail la mise en oeuvre d'un procédé de gestion de messages vocaux selon l'invention, dans un environnement réseau tel qu'exposé ci-dessus en relation avec la figure 1.

Dans le mode de réalisation choisi et représenté, le procédé de gestion de messages vocaux selon l'invention est mis en oeuvre par une application logicielle installée dans un terminal de téléphonie mobile de type "téléphone intelligent" *(smartphone),* par exemple un iPhone® commercialisé par la société Apple®.

Dans ce mode de réalisation, le procédé est mis en oeuvre dans le terminal mobile MT représenté à la figure 1. Cependant, selon un autre mode de réalisation, le procédé de l'invention peut être mis en oeuvre dans un terminal de téléphonie fixe (de type voix sur IP) tel que le terminal IPT représenté à la figure 1.

Dans le cadre du mode du réalisation exposé, l'utilisateur considéré dispose de plusieurs terminaux de communication : un terminal mobile MT, un terminal IP fixe IPT et un terminal IP d'entreprise, par exemple le terminal CT1.

Comme représenté à la figure 2, le procédé de gestion de messages vocaux, selon l'invention, comporte trois opérations successives principales OP1, OP2, OP3, correspondant respectivement à :
- la connexion (OP1) du terminal mobile MT de l'utilisateur, au réseau IP, 20 ;
- la récupération (OP2) dans le terminal mobile MT des nouveaux messages vocaux reçus par chaque système de téléphonie vocale 201, 202, 301 ;
- la mise à jour (OP3) d'une interface homme-machine du terminal MT de l'utilisateur, avec des informations d'identification des nouveaux messages vocaux reçus.

Au cours d'une opération préalable, une application logicielle - désignée dans le cadre du présent exposé par "application de messagerie vocale unifiée" - est installée dans le terminal mobile MT de l'utilisateur. Par ailleurs, l'application installée est paramétrée avec des informations d'identification et d'accès relatives aux divers comptes de messagerie vocale dont les messages vocaux seront récupérés dans le terminal.

Ensuite lors de la première opération, OP1, mise en oeuvre par l'application de messagerie vocale unifiée précitée, une connexion est établie entre le terminal mobile et le réseau IP. Cette opération inclut une étape S10 au cours de laquelle le terminal mobile communique, selon le protocole IP, avec la plateforme d'authentification IP, AUTH (203) pour être authentifié et être autorisé à accéder au service de messagerie unifiée selon l'invention.

Au cours de l'opération suivante, OP2, si le terminal mobile MT est authentifié auprès de la plateforme AUTH, le terminal mobile communique avec chacun des serveurs de messagerie vocale distinct VM1 (201), VM2 (202) et PBX (301), afin d'être authentifié auprès de chacun d'entre eux. A cette fin, des requêtes d'authentification S11, S12, S13 sont envoyées par le terminal MT à destination, respectivement, des serveurs de messagerie VM1 (201), VM2 (202) et PBX (301). Ces requêtes d'authentification sont envoyées en séquence ou en parallèle, selon le type de système d'exploitation équipant le terminal utilisateur et/ou selon l'implémentation choisie de l'application de messagerie vocale unifiée, dans le terminal utilisateur. Au cours de ces étapes d'authentification, des données issues des paramètres relatifs aux divers comptes de messagerie vocale, sont stockés dans la mémoire du terminal utilisateur, et le cas échéant dans une carte SIM *(Subscriber Identity Module)* insérée dans le terminal utilisateur.

En variante, les paramètres d'authentification de l'utilisateur peuvent être configurés par une technique utilisant des messages SMS *(Short Message Service)* transmis au terminal utilisateur. Selon un premier exemple, un message SMS, invisible à l'utilisateur, est transmis par le serveur d'authentification 203 au terminal utilisateur, puis, l'application de messagerie selon l'invention extrait automatiquement du corps du messages SMS reçu les données d'authentification. Selon un second exemple, un message SMS est transmis par le serveur d'authentification 203 au terminal utilisateur, et c'est l'utilisateur lui-même qui en extrait les données d'authentification et configure manuellement les divers comptes de messagerie.

En pratique, les requêtes d'authentification relatives aux étapes S11 et S12 à destination des serveurs de messagerie VM1 (messagerie vocale associée au compte mobile) et VM2 (messagerie vocale associée au compte de téléphonie fixe VoIP), utilisent le protocole HTTP *(HyperText Transport Protocol.*

Concernant la requête d'authentification S13 entre le terminal mobile MT et la messagerie vocale gérée par l'autocommutateur PBX (301), celle-ci peut être, selon l'implémentation choisie, une requête à destination d'une interface de programmation d'application (API - *Application Programming Interface,* en anglais) de la messagerie vocale associée au PBX, ou bien une requête d'authentification adressée au serveur IMAP *(Internet Message Access Protocol*) associé à la messagerie électronique gérée par l'autocommutateur PBX (base de données DB 302).

De même que pour les autres messageries vocales, l'authentification de l'utilisateur avec la messagerie vocale associée au PBX peut être effectuée en utilisant une technique à base de messages SMS.

Une fois réussie l'authentification de l'utilisateur auprès des différents systèmes de messagerie vocale, le terminal mobile MT peut alors procéder à la récupération des nouveaux messages vocaux reçus par chaque système de téléphonie vocale 201, 202, 301. Dans ce but, des requêtes de synchronisation S21, S22, S23 sont envoyées par le terminal utilisateur, à destination, respectivement, des serveurs de messagerie VM1 (201), VM2 (202) et PBX (301). Ces requêtes de synchronisation sont envoyées en séquence ou en parallèle, selon le type de système d'exploitation équipant le terminal utilisateur et/ou selon l'implémentation choisie de l'application de messagerie vocale unifiée, dans le terminal utilisateur.

Ces requêtes de synchronisation ont pour fonction non seulement de récupérer les nouveaux messages vocaux reçus dans chacune des messageries vocales, mais également de synchroniser l'état des messages vocaux entre les messages vocaux déjà stockés dans le terminal MT et ceux stockés par chaque système de messagerie vocale 201, 202, 301. En particulier, dans le mode de réalisation de l'invention, les messages vocaux peuvent être associés à au moins un état parmi les états suivants : "lu", "nouveau", "transféré", "répondu".

En pratique, les requêtes de synchronisation correspondant aux étapes S21 et S22, entre le terminal mobile MT et respectivement les serveurs de messagerie vocale VM1 (messagerie vocale associée au compte mobile) et VM2 (messagerie vocale associée au compte de téléphonie fixe VoIP), sont des requêtes contenant des fonctions spécifiques de synchronisation de message, définies dans l'interface de programmation (API) associée respectivement à la messagerie vocale VM1 et à la messagerie vocale VM2. Les fonctions requises pour interroger les diverses messageries vocales, via leur interface de programmation (API), ont été obtenues au préalable par l'application de messagerie unifiée exécutée dans le terminal mobile MT, au cours des étapes d'authentification susmentionnées (S11, S12) lorsque celles-ci ont réussi. Plus précisément, selon un exemple de réalisation, des informations représentatives des fonctions d'interrogation définie pour l'API de chacune des messageries VM1 et VM2, sont obtenues dans le terminal utilisateur par téléchargement, à partir du serveur de messagerie vocale considéré, d'un *cookie* (défini selon le protocole HTTP). Concernant la messagerie vocale VM1 associée au réseau mobile 10, la communication avec l'interface API de la messagerie vocale est effectuée via la connexion C1 (accès sécurisé) avec le réseau IP 20.

Concernant, plus particulièrement le serveur de messagerie vocale lié au réseau d'entreprise CN (30) et géré par l'autocommutateur PBX associée à la base de données DB (301, 302), la récupération des messages vocaux est effectuée, selon un exemple de réalisation, de la manière qui suit. Chaque nouveau message vocal destiné à un utilisateur - employé de l'entreprise - qui est stocké dans le serveur de messagerie vocale associée au réseau d'entreprise CN, est dupliqué sous la forme d'un message électronique *(email*) envoyé vers le compte de messagerie électronique de l'utilisateur destinataire. Ce message électronique contenant le nouveau message vocal est donc stocké dans le serveur de messagerie électronique (base de données 302) du réseau d'entreprise. Lors de l'étape S23 (figure 2) de synchronisation des messages entre le terminal mobile MT et l'autocommutateur PBX 301, le terminal MT envoie ainsi une requête selon le protocole IMAP *(Internet Message Access Protocol*) - qui est un protocole permettant de récupérer les courriers électroniques sur des serveurs de messagerie et de les synchroniser (effacer, marquer comme lu, etc.) - à destination de l'interface IMAP du serveur de messagerie électronique associé au réseau d'entreprise CN (30). En variante, le protocole POP *(Post Office Protocol* et une interface POP correspondante du serveur de messagerie électronique, peuvent être utilisés pour la récupération des messages électroniques contenant les messages vocaux.

Ainsi, l'application de messagerie unifiée exécutée dans le terminal mobile MT peut récupérer sous forme de courriers électroniques les nouveaux messages vocaux stockés dans le serveur de messagerie vocale associé au réseau d'entreprise CN (30).

Une fois les nouveaux messages vocaux reçus dans le terminal mobile MT, l'application logicielle selon l'invention, au cours de l'opération OP3 (figure 2), traite ces messages en fonction de leur format de réception, pour les mettre dans un format compatible avec la présentation d'informations représentatives de ces messages (étape S30 à la figure 2) sur une interface homme-machine du terminal d'utilisateur MT. En pratique, des informations représentatives de ces messages vocaux sont affichées sur une interface graphique affichée sur l'écran du terminal mobile MT.

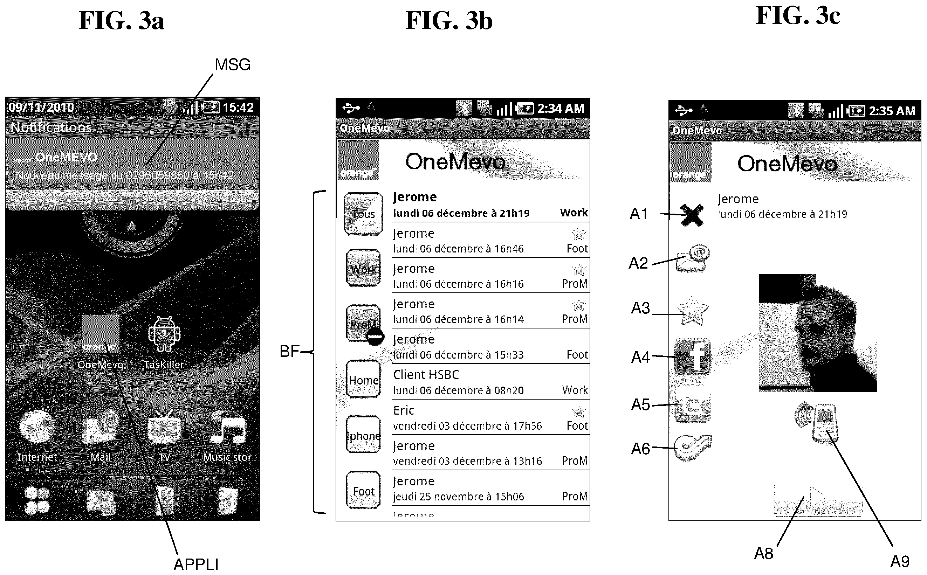

Les **figures 3a****-c** représentent une telle interface graphique utilisateur affichée sur l'écran d'un téléphone mobile, de type *smartphone,* à trois stades différents de fonctionnement de l'application logicielle de gestion des messages vocaux selon l'invention, installée dans le téléphone.

Sur la **figure 3a** l'application de messagerie vocale unifiée selon l'invention - appelée dans le cadre de cet exposé "OneMEVO" - est représentée à l'écran du terminal par un icône, identifié par la référence "APPLI". Pour lancer cette application, il faut par exemple toucher l'icône, lorsque l'écran est tactile.

Dans le mode de réalisation présenté, lorsque l'application "OneMEVO" n'est pas ouverte, un processus de synchronisation en tâche de fond notifie l'utilisateur de la réception d'un nouveau message, comme indiqué par la référence "MSG" à la figure 3a. Suite à la notification d'arrivée d'un nouveau message, l'utilisateur peut décider d'ouvrir l'application pour prendre connaissance des nouveaux messages.

La **figure 3b****,** illustre une interface graphique de l'application de messagerie unifiée (OneMEVO) lorsque celle-ci est ouverte par l'utilisateur. Dans cet exemple, les messages vocaux sont présentés à l'utilisateur sous forme d'une liste, dans laquelle les nouveaux messages sont identifiés par un aspect différent des autres messages, par exemple en caractères gras et/ou d'une couleur spécifique. Dans l'exemple de la figure 3b, le premier message de la liste est un nouveau message de "Jérôme" qui provient de la messagerie vocale de téléphonie fixe professionnelle *("Work")* (fig.1, VM2, 202).

Comme représenté à la figure 3b, l'interface graphique de gestion des messages vocaux dispose de boutons de filtrage, BF, permettant de trier les messages. Ainsi :
- le bouton "Tous" permet d'afficher tous les messages quelle que soit la messagerie d'origine ;
- le bouton "Home" permet d'afficher uniquement les messages vocaux en provenance de la messagerie vocale de téléphonie fixe personnelle (fig. 1, VM2, 202) ;
- le bouton "iPhone" permet d'afficher uniquement ceux en provenance de la messagerie vocale associée au téléphone mobile personnel (fig. 1, VM1, 201) de l'utilisateur ;
- le bouton "foot" permet d'afficher les messages vocaux des contacts de l'utilisateur qui sont déclarés dans le répertoire du téléphone mobile de l'utilisateur comme faisant partie du groupe défini pour le club de football dont est membre l'utilisateur ; enfin,
- le bouton "ProM" permet d'afficher uniquement les messages vocaux issus de la messagerie vocale associée au téléphone mobile professionnel de l'utilisateur (non représentée sur la fig. 1).

Par ailleurs, comme illustré par l'icône représentant un panneau "sens interdit" sur le bouton "ProM", l'interface graphique pilotée par l'application de messagerie selon l'invention donne la possibilité à l'utilisateur d'activer ou de désactiver la synchronisation des messages vocaux en provenance d'une (ou plusieurs) messagerie vocale. Ainsi, dans l'exemple illustré, l'utilisateur ne souhaite pas recevoir sur son téléphone mobile personnel de messages vocaux en provenance de la messagerie vocale associée à son téléphone mobile professionnel.

L'utilisateur a également la possibilité de sélectionner l'un des messages vocaux identifiés sur l'interface graphique. La **figure 3c** présente ainsi l'interface graphique de l'application de messagerie unifiée après que l'utilisateur a sélectionné un message vocal. Dans cet exemple, l'utilisateur a sélectionné le dernier message reçu, non encore lu, en provenance de "Jerome", et l'interface graphique présente alors à l'utilisateur un choix de diverses actions sous forme de boutons d'actions identifiés par les signes de référence A1-A8 sur la figure 3c.

Les boutons A1, A2 et A3 permettent respectivement de supprimer le message vocal, de le transférer sous forme de pièce attachée d'un message électronique (email), et de le marquer comme "favori". Les boutons A4 et A5 permettent de publier le message vocal sur des réseaux sociaux tels que Facebook™ (bouton A4) et Twitter™ (bouton A5). Le bouton A6 permet d'effectuer un traitement de transcodage "parole vers texte" *(Speech to Text)* sur le message vocal.

Enfin, les boutons A8 et A9 offrent respectivement la possibilité à l'utilisateur de déclencher la lecture audio du message vocal (bouton A8), et de déclencher le rappel téléphonique vers l'auteur du message vocal *(Click to dial*) (bouton A9).

On notera que la photographie de l'auteur du message vocal est affichée sur l'interface graphique de l'application de messagerie vocale unifiée, cette photographie est automatiquement récupérée par l'application dans le répertoire utilisateur du terminal de l'utilisateur.

Par l'intermédiaire de l'interface graphique mise en oeuvre par l'application de messagerie unifiée selon l'invention, l'utilisateur a ainsi la possibilité de contrôler la synchronisation de ses différents comptes de messagerie ; il peut notamment en paramétrer l'usage, manuellement (par exemple, activation ou désactivation de la synchronisation d'un compte particulier) ou bien automatiquement, en fonction de profils d'utilisation prédéfinis, basés par exemple sur la prise en compte d'un créneau horaire, de données de géolocalisation (GPS), d'un état de présence de l'utilisateur, etc.

Comme exposé ci-avant, le procédé de gestion de messages vocaux selon l'invention est mis en oeuvre, dans le mode de réalisation choisi et décrit, sous forme d'une application logicielle, c'est-à-dire un ou plusieurs programmes d'ordinateur formant un ensemble logiciel dont la finalité est la mise en oeuvre de l'invention lorsque ce logiciel est exécuté par un système informatique approprié, notamment un terminal de communication (MT, IPT) d'utilisateur apte à se connecter à un réseau de communication de type "réseau IP". Un tel terminal de communication dans lequel est installée une application de messagerie vocale unifiée selon l'invention, comporte par conséquent un module de récupération de nouveaux messages vocaux reçus par plusieurs systèmes de messagerie vocale distincts, et une interface homme-machine appropriée pour fournir des informations d'identification des messages récupérés, à un utilisateur de ce terminal.

Une application logicielle selon l'invention peut être fournie sous la forme d'un logiciel stocké sur un support d'informations, lequel peut être constitué par n'importe quelle entité ou dispositif capable de stocker un programme selon l'invention. Par exemple, le support en question peut comporter un moyen de stockage matériel, tel qu'une ROM ou une RAM, par exemple un CD ROM, une clé USB, ou encore un moyen d'enregistrement magnétique tel qu'un disque dur. En variante, un logiciel selon l'invention peut être partiellement incorporé dans un circuit intégré.

Par ailleurs, le support d'informations d'un programme selon l'invention peut être aussi un support immatériel transmissible, tel qu'un signal électrique ou optique pouvant être acheminé via un câble électrique ou optique, par radio ou par d'autres moyens. Une application logicielle selon l'invention peut être en particulier téléchargée sur un réseau de type Internet.

D'un point de vue conception, un programme d'ordinateur selon l'invention peut utiliser n'importe quel langage de programmation et être sous la forme de code source, code objet, ou de code intermédiaire entre code source et code objet (par ex., une forme partiellement compilée), ou dans n'importe quelle autre forme souhaitable pour mettre en oeuvre un procédé de gestion de messages vocaux, selon l'invention. Selon un mode de réalisation particulier de l'application logicielle selon l'invention, le langage de programmation utilisé est le langage Java.

## Revendications

1. Procédé de gestion de messages vocaux obtenus à partir d'un ensemble d'au moins deux systèmes de messagerie vocale, mis en oeuvre par un terminal (MT, IPT) d'utilisateur pouvant se connecter à un réseau de communication de type "réseau IP" (20), **caractérisé en ce qu'**il comporte des opérations de :
- connexion (OP1) du terminal d'utilisateur (MT, IPT) audit réseau IP (20) et communication (S10) avec une plateforme d'authentification (203) sur le réseau IP afin d'autoriser ledit terminal à accéder à un service de messagerie permettant l'obtention de messages vocaux à partir d'au moins deux systèmes différents de messagerie vocale (201, 202, 301), chaque système de messagerie vocale étant spécifique à un type différent de réseau de communication ;
- si ledit terminal est authentifié auprès de la plateforme d'authentification (203), récupération (OP2) dans le terminal d'utilisateur (MT, IPT) des nouveaux messages vocaux reçus par chaque système de messagerie vocale (201, 202, 301), ladite opération de récupération (OP2) incluant une étape de synchronisation (S21, S22, S23) de l'état des messages vocaux entre les messages vocaux stockés dans le terminal (MT, IPT) et ceux stockés par chaque système de messagerie vocale (201, 202, 301) ;
- mise à jour (OP3) d'une interface homme-machine du terminal d'utilisateur, avec des informations d'identification des nouveaux messages vocaux reçus.

2. Procédé selon la revendication 1, dans lequel les messages vocaux peuvent être dans au moins un état parmi l'ensemble d'états suivant : "lu", "nouveau", "transféré", "répondu".

3. Procédé selon la revendication 1 ou 2, dans lequel ledit ensemble de systèmes différents de messagerie vocale inclut au moins deux des systèmes de messagerie vocale suivants :
- un système de messagerie vocale de téléphonie voix sur IP (202) ;
- un système de messagerie vocale de type PBX (301) ;
- un système de messagerie vocale de téléphonie mobile (201).

4. Procédé selon l'une quelconque des revendications 1 à 3, dans lequel ledit terminal d'utilisateur est un terminal de téléphonie mobile (MT) connecté à un réseau (10) de téléphonie mobile, ledit terminal d'utilisateur étant connecté au réseau IP (20) via une passerelle d'accès (101) entre le réseau (10) de téléphonie mobile et le réseau IP (20).

5. Procédé selon l'une quelconque des revendications 1 à 3, dans lequel le terminal d'utilisateur est un terminal de téléphonie de type "voix sur IP" (IPT).

6. Procédé selon l'une quelconque des revendications précédentes, dans lequel l'opération de récupération (OP2) de messages vocaux, pour chaque système de messagerie vocale (201, 202, 301), inclut une étape préalable d'authentification (S11, S12, S13) de l'utilisateur auprès d'un serveur d'authentification associé au système de messagerie vocale considéré.

7. Procédé selon l'une quelconque des revendications 1 à 6, dans lequel ladite interface homme-machine du terminal d'utilisateur, est une interface graphique affichée sur un écran équipant le terminal.

8. Terminal de communication (MT, IPT) d'utilisateur apte à se connecter à un réseau de communication de type "réseau IP" (20), ledit terminal comportant :
- des moyens de connexion audit réseau afin de communiquer avec une plateforme d'authentification (203) afin d'être autorisé à accéder à un service de messagerie permettant l'obtention de messages vocaux à partir d'au moins deux systèmes différents de messagerie vocale (201, 202, 301), chaque système de messagerie vocale étant spécifique à un type différent (10, 20, 30) de réseau de communication ;
- des moyens de récupération de messages pour récupérer de nouveaux messages vocaux reçus par chaque système de messagerie vocale, lorsque ledit terminal est authentifié auprès de la plateforme d'authentification ;
- une interface homme-machine pour fournir des informations d'identification de nouveaux messages reçus, à un utilisateur dudit terminal.

9. Application logicielle destinée à être installée dans un terminal de communication apte à se connecter à un réseau de communication de type "réseau IP", ladite application logicielle comportant des instructions de programme, dont l'exécution par un processeur équipant le terminal provoque la mise en oeuvre d'un procédé de gestion de messages vocaux selon l'une quelconque des revendications 1 à 7.

## Patentansprüche

1. Verfahren zur Verwaltung von Sprachnachrichten, die von einer Einheit von mindestens zwei Voice-Mail-Systemen erhalten wurden, das von einem Benutzerendgerät (MT, IPT), das sich mit einem Kommunikationsnetz vom Typ des "IP-Netzes" (20) verbinden kann, umgesetzt wird, **dadurch gekennzeichnet, dass** es die folgenden Vorgänge aufweist:
- Anschließen (OP1) des Benutzerendgerätes (MT, IPT) an das IP-Netz (20) und Kommunizieren (S10) mit einer Authentifizierungsplattform (203) auf dem IP-Netz, um dem Endgerät zu ermöglichen, auf einen Messaging-Dienst zuzugreifen, der das Erhalten von Sprachnachrichten von mindestens zwei verschiedenen Voice-Mail-Systemen (201, 202, 301) ermöglicht, wobei jedes Voice-Mail-System für einen anderen Typ von Kommunikationsnetz spezifisch ist;
- wenn das Endgerät bei der Authentifizierungsplattform (203) authentifiziert wurde, Abrufen (OP2) in dem Benutzerendgerät (MT, IPT) der neuen Sprachnachrichten, die von jedem Voice-Mail-System (201, 202, 301) empfangen wurden, wobei der Vorgang des Abrufens (OP2) einen Synchronisierungsschritt (S21, S22, S23) des Zustands der Sprachnachrichten zwischen den Sprachnachrichten, die in dem Endgerät (MT, IPT) gespeichert wurden, und jenen, die von jedem Voice-Mail-System (201, 202, 301) gespeichert wurden, aufweist;
- Aktualisieren (OP3) von einer Mensch-Maschine-Schnittstelle des Benutzerendgerätes mit Identifizierungsinformationen der neuen empfangenen Sprachnachrichten.

2. Verfahren nach Anspruch 1, wobei die Sprachnachrichten in mindestens einem Zustand unter dem folgenden Satz von Zuständen sein können: "gelesen", "neu", "übertragen", "beantwortet".

3. Verfahren nach Anspruch 1 oder 2, wobei die Gesamtheit von verschiedenen Voice-Mail-Systemen mindestens zwei der folgenden Voice-Mail-Systeme aufweist:
- ein Voice-Mail-System der VoIP-Telefonie (202);
- ein Voice-Mail-System vom Typ des PBX-Systems (301) ;
- ein Voice-Mail-System der Mobilfunktelefonie (201) .

4. Verfahren nach einem der Ansprüche 1 bis 3, wobei das Benutzerendgerät ein Mobilfunkendgerät (MT) ist, das an ein Mobilfunknetz (10) angeschlossen ist, wobei das Benutzerendgerät über ein Zugangsgateway (101) zwischen dem Mobilfunknetz (10) und dem IP-Netz (20) an das IP-Netz (20) angeschlossen wird.

5. Verfahren nach einem der Ansprüche 1 bis 3, wobei das Benutzerendgerät ein Endgerät vom Typ der "VoIP"-Telefonie (IPT) ist.

6. Verfahren nach einem der vorangehenden Ansprüche, wobei der Vorgang des Abrufens (OP2) von Sprachnachrichten für jedes Voice-Mail-System (201, 202, 301) einen vorhergehenden Schritt des Authentifizierens (S11, S12, S13) des Benutzers bei einem Authentifizierungsserver, der mit dem betreffenden Voice-Mail-System verbunden ist, aufweist.

7. Verfahren nach einem der Ansprüche 1 bis 6, wobei die Mensch-Maschine-Schnittstelle des Benutzerendgerätes eine graphische Schnittstelle ist, die auf einem Bildschirm angezeigt wird, mit dem das Endgerät ausgestattet ist.

8. Benutzerkommunikationsendgerät (MT, IPT), das geeignet ist, sich mit einem Kommunikationsnetz vom Typ des "IP-Netzes" (20) zu verbinden, wobei das Endgerät Folgendes aufweist:
- Mittel zum Anschließen an das Netz, um mit einer Authentifizierungsplattform (203) zu kommunizieren, um zugelassen zu werden, auf einen Messaging-Dienst zuzugreifen, der das Erhalten von Sprachnachrichten von mindestens zwei verschiedenen Voice-Mail-Systemen (201, 202, 301) ermöglicht, wobei jedes Voice-Mail-System für einen anderen Typ (10, 20, 30) von Kommunikationsnetz spezifisch ist;
- Mittel zum Abrufen von Nachrichten, um neue Sprachnachrichten abzurufen, die von jedem Voice-Mail-System empfangen wurden, wenn das Endgerät bei der Authentifizierungsplattform authentifiziert wurde;
- eine Mensch-Maschine-Schnittstelle, um Identifizierungsinformationen von neuen empfangenen Nachrichten einem Benutzer des Endgerätes bereitzustellen.

9. Softwareanwendung, die dazu bestimmt ist, in einem Kommunikationsendgerät installiert zu werden, das geeignet ist, sich mit einem Kommunikationsnetz vom Typ des "IP-Netzes" zu verbinden, wobei die Softwareanwendung Programmanweisungen aufweist, deren Ausführung durch einen Prozessor, mit dem das Endgerät ausgestattet ist, das Umsetzen eines Verfahrens zur Verwaltung von Sprachnachrichten nach einem der Ansprüche 1 bis 7 bewirkt.

## Claims

1. Method for managing voice messages obtained on the basis of a set of at least two voice messaging systems, implemented by a user terminal (MT, IPT) able to connect to a communication network of "IP network" (20) type, **characterized in that** it comprises operations of:
- connection (OP1) of the user terminal (MT, IPT) to said IP network (20) and communication (S10) with an authentication platform (203) on the IP network so as to authorize said terminal to access a messaging service allowing the obtaining of voice messages on the basis of at least two different voice messaging systems (201, 202, 301), each voice messaging system being specific to a different type of communication network;
- if said terminal is authenticated with the authentication platform (203), recovery (OP2) in the user terminal (MT, IPT) of the new voice messages received by each voice messaging system (201, 202, 301), said recovery operation (OP2) including a step of synchronization (S21, S22, S23) of the state of the voice messages between the voice messages stored in the terminal (MT, IPT) and those stored by each voice messaging system (201, 202, 301);
- updating (OP3) of a man-machine interface of the user terminal, with information for identifying the new voice messages received.

2. Method according to Claim 1, in which the voice messages can be in at least one state from among the following set of states: "read", "new", "transferred", "responded".

3. Method according to Claim 1 or 2, in which said set of different voice messaging systems includes at least two of the following voice messaging systems:
- a Voice over IP telephone voice messaging system (202);
- a voice messaging system of PBX type (301);
- a mobile telephone voice messaging system (201).

4. Method according to any one of Claims 1 to 3, in which said user terminal is a mobile telephone terminal (MT) connected to a mobile telephone network (10), said user terminal being connected to the IP network (20) via an access gateway (101) between the mobile telephone network (10) and the IP network (20).

5. Method according to any one of Claims 1 to 3, in which the user terminal is a telephone terminal of "Voice over IP" type (IPT).

6. Method according to any one of the preceding claims, in which the recovery operation (OP2) of voice messages, for each voice messaging system (201, 202, 301), includes a prior step of authentication (S11, S12, S13) of the user with an authentication server associated with the voice messaging system considered.

7. Method according to any one of Claims 1 to 6, in which said man-machine interface of the user terminal, is a graphical interface displayed on a screen with which the terminal is equipped.

8. User communication terminal (MT, IPT) able to connect to a communication network of "IP network" (20) type, said terminal comprising:
- means of connection to said network so as to communicate with an authentication platform (203) so as to be authorized to access a messaging service allowing the obtaining of voice messages on the basis of at least two different voice messaging systems (201, 202, 301), each voice messaging system being specific to a different type (10, 20, 30) of communication network;
- means for recovering messages so as to recover new voice messages received by each voice messaging system, when said terminal is authenticated with the authentication platform;
- a man-machine interface for providing information for identifying new messages received, to a user of said terminal.

9. Software application intended to be installed in a communication terminal able to connect to a communication network of "IP network" type, said software application comprising program instructions, whose execution by a processor with which the terminal is equipped causes the implementation of a method for managing voice messages according to any one of Claims 1 to 7.
